# DEMANDE DE BREVET EUROPEEN

(11) **EP 1 843 451 A1**
(43) Date de publication de la demande: **10.10.2007**
(21) Numéro de dépôt: 07104069.5
(22) Date de dépôt: 13.03.2007
(51) Int. Cl.: H02K 5/14

(54) **Dispositif porte-balais pour une machine électrique tournante**

(30) Priorité: 03.04.2006 FR 0602888
(71) Demandeur: VALEO EQUIPEMENTS ELECTRIQUES MOTEUR, 94046 Créteil (FR)
(72) Inventeur: Talon, Frédéric, 69360, SOLAIZE (FR); Metral, Jean Sébastien, 38290, LA VERPILLIERE (FR)
(74) Mandataire: de Lambilly Delorme, Marie Pierre

(57) **Abrégé**

L'invention propose un dispositif (10) porte-balai pour machine électrique tournante, comportant
- un support (12) apte à être relié mécaniquement à la machine électrique tournante et comprenant une ouverture (72) destinée au passage d'un arbre d'induit de la machine électrique tournante, l'arbre d'induit étant destiné à supporter un collecteur;
- un élément électriquement conducteur (14) destiné à être relié à une source de tension;
- un moyen de fixation électriquement isolant (16A, 16B) reliant mécaniquement l'élément électriquement conducteur (14) au support (12) ;
- au moins quatre cages (Cp, Cn) solidaires du support (12) destinées à recevoir des balais (Bp, Bn) ;
- au moins quatre balais (Bp, Bn) reliés électriquement par paires et aptes à coopérer avec le collecteur, l'une des paires de balais (Bn) étant destinée à être reliée à la masse, l'autre paire de balais (Bp) étant destinée à être reliée à l'élément électriquement conducteur (14) ;

*caractérisé en ce que* l'élément électriquement conducteur (14) est situé dans l'ouverture (72) du support (12).

## Description

La présente invention concerne un dispositif porte-balais pour une machine électrique tournante.
L'invention concerne notamment un dispositif porte-balais pour une machine électrique comportant au moins un balai relié électriquement à une source de tension.

Un dispositif porte-balais pour machine électrique tournante comporte de façon conventionnelle :
- un support apte à être relié mécaniquement à la machine électrique tournante et comprenant une ouverture destinée au passage d'un arbre d'induit de la machine électrique tournante,
- un collecteur porté par l'arbre d'induit;
- un élément électriquement conducteur destiné à être relié à une source de tension;
- un moyen de fixation électriquement isolant reliant mécaniquement l'élément électriquement conducteur au support ;
- au moins une cage solidaire du support destinée à recevoir un balais ;
- au moins un balai relié électriquement à l'élément électriquement conducteur aptes à coopérer avec le collecteur.

L'élément électriquement conducteur ou pont inter-balais est en général constitué d'une tresse ou d'une bande en matériau conducteur, par exemple en cuivre, en acier ou en aluminium. Dans le cas d'un démarreur l'élément conducteur peut être relié directement à la batterie ou être en série avec d'autres éléments comme une bobine par exemple.

Il est alors nécessaire de trouver un agencement et un positionnement dans le dispositif porte-balais afin notamment d'éviter tout court-circuit.
En effet, l'élément électriquement conducteur ne doit pas être susceptible d'entrer en contact électrique avec une pièce de potentiel opposé appartenant au dispositif porte-balais.
Le dispositif porte-balais comporte généralement autant de cages que de balais, chaque cage fixe étant apte à recevoir un balai en coulissement.
Pour alimenter les balais, il est connu selon une première conception d'utiliser un élément électriquement conducteur sous la forme d'un fil conducteur. Or ce fil, pour alimenter des balais sous une certaine polarité, peut passer au-dessus d'une cage d'un balai de polarité opposée. Il est alors nécessaire de prévoir une gaine isolante autour de cet élément électriquement conducteur dans la zone de franchissement de la cage du balai. C'est en particulier le cas lorsqu'il y a deux balais de même polarité, et deux balais de polarité opposée.
Cependant, une telle gaine d'isolation peut se dégrader au cours du temps à cause des phénomènes d'échauffement et des vibrations. Les risques de court-circuit sont alors plus importants.
En outre, un tel fil conducteur passant au-dessus d'une cage augmente l'encombrement axial du dispositif porte-balais.

Selon une autre conception, le document US-A-5.973.433 propose un dispositif porte-balais faisant appel à deux ponts inter-balais coplanaires formant un anneau. Ces deux ponts sont noyés par surmoulage dans une plaque support en matière plastique.
Dans cette conception, l'encombrement radial du support est plus important. En effet, les ponts inter balais se trouvant décalés radialement vers l'extérieur par rapport aux cages, la plaque support doit ainsi présenter un plus grand diamètre.

De plus, cette solution a un coût élevé peu adapté aux produits bons marchés et ne permet pas une intervention aisée pour la maintenance du dispositif.

Ainsi, l'objet de la présente invention est de proposer un dispositif porte-balais qui permette :
- d'avoir un encombrement axial limité,
- d'avoir un encombrement radial limité,
- d'éviter tout court-circuit entre l'élément électriquement conducteur et le reste du dispositif,
- d'être d'une conception simple et économique
- de permettre un grande standardisation.

Une solution au problème technique posé est selon l'objet de la présente invention un dispositif porte-balais caractérisé en ce que l'élément électriquement conducteur est situé dans l'ouverture du support.

Grâce à l'invention, on réduit ainsi l'encombrement radial du dispositif, l'élément électriquement conducteur se trouvant entre l'arbre d'induit et le support.
En outre, cette solution est simple et économique. Elle permet également une utilisation standardisée puisqu'il est possible d'y connecter un ou plusieurs balais.

Selon des modes de réalisations préférentiels non limitatifs, le dispositif objet de l'invention présente les caractéristiques supplémentaires, prises isolément ou en combinaison, énoncées ci-après.

Le dispositif porte balais a au moins deux cages et deux balais reliés à l'élément électriquement conducteur. Cet ensemble de deux cages et deux balais constitue une paire. Dans ce cas, on pourra avoir également une deuxième paire de cages et de balais reliés à la masse ou à un point neutre.

L'élément conducteur et le support sont sensiblement coplanaires. L'élément conducteur reliant les deux balais est aussi appelé pont conducteur. La hauteur axiale est donc minimisée.

L'élément conducteur et le support sont sensiblement de même épaisseur. L'épaisseur du pont, étant la même que celle de la tôle porte balai, la fonction pont inter balai ne prends alors aucune place à la différence des ponts sur cages actuels.

L'élément conducteur et le support sont sensiblement concentriques. Une distance minimum est prévue entre les deux éléments (support et conducteur) ce qui garantie une isolation entre les deux pièces de potentiels différents contrairement à la solution classique "pont sur cages" dans laquelle l'isolation entre le pont et la cage négative est faite par un morceau de gaine isolante.

L'élément conducteur et le support sont réalisés dans un même matériau. Par exemple si le support est en acier, les deux éléments pourront alors être découpés dans la même plaque et en même temps.

Le moyen de fixation se présente sous la forme d'au moins une plaque. Le moyen de fixation est en matériau isolant. Le moyen de fixation reliant le pont et le support, la tenue en vibration de l'ensemble est amélioré puisque chaque pièce renforce la tenue de la pièce voisine.

Le moyen de fixation se présente sous la forme d'une couronne.

Le moyen de fixation se présente sous la forme de deux demi-plaques dont chacune constitue une demi couronne. Ce qui permet de diminuer les chutes de matières premières lors de la fabrication.

Le support et l'élément conducteur sont reliés au moyen de fixation par des rivets. Le sertissage des rivets présente l'avantage d'une part de limiter la soudure à la liaison entre les shunts et le pont, et d'autre part de limiter le montant des investissements de fabrication.

Le corps de chaque rivet est réalisé venu de matière avec le support ou l'élément conducteur à partir duquel il s'étend axialement vers le haut à travers un trou associé du moyen de fixation.

Chaque cage porte-balai est fixée sur la face supérieure du moyen de fixation. Le support est lui fixé sur la face inférieure du moyen de fixation.

L'élément conducteur comporte deux pattes de raccordement à chacune desquelles un balai est apte à être raccordé électriquement par un connecteur.

L'invention sera mieux comprise à la lecture de la description qui va suivre et donné uniquement à titre d'exemple sur un démarreur, toute machine électrique tournante étant concernée, comme par exemple un alternateur, et faite en référence aux dessins annexés dans lesquels :
- la figure 1 est une vue générale en coupe axiale partielle d'un démarreur de véhicule automobile ;
- la figure 2 est une vue en perspective de dessus d'un exemple de réalisation d'un dispositif porte-balais à deux paires de balais de polarité opposée;
- la figure 3 est une vue en perspective éclatée des principaux composants du dispositif illustré à la figure 2 ;
- la figure 4 est une vue en perspective en position assemblée et fixée des composants illustrés à la figure 3 ;
- la figure 5 est une vue en perspective de dessous de l'ensemble illustré aux figures 3 et 4.

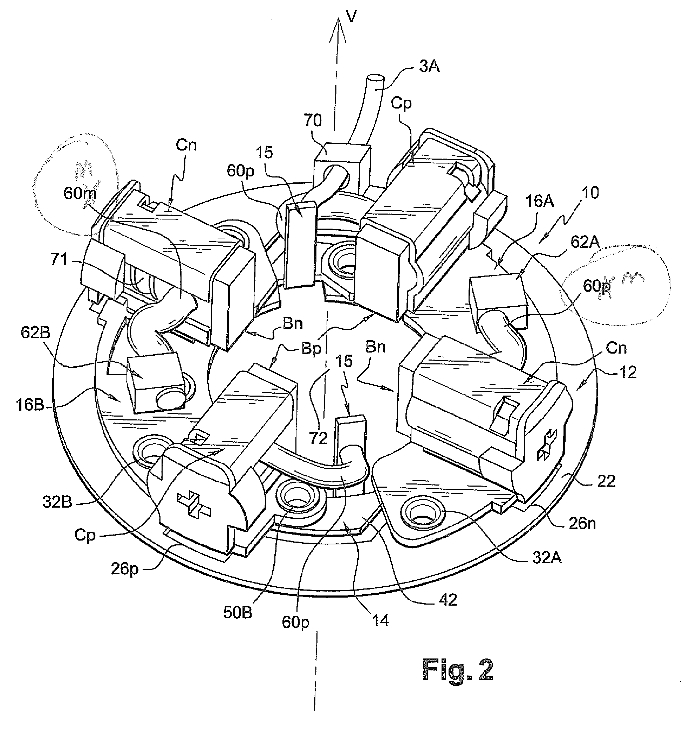

Dans la description qui va suivre, à titre non limitatif et afin d'en faciliter la compréhension, on adoptera la terminologie verticale, supérieure, inférieure, etc. selon l'orientation de bas en haut de l'axe de rotation V indiqué à la figure 2.

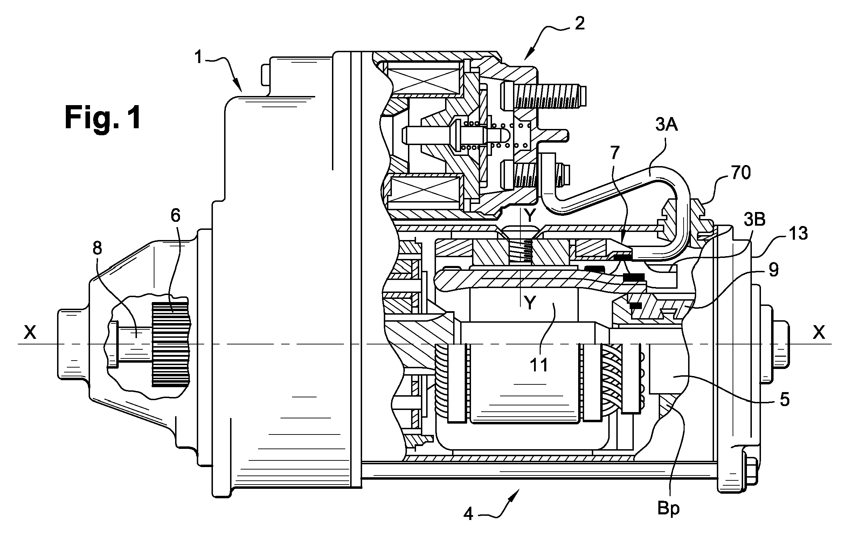

On a représenté à la figure 1 , un démarreur électrique pour un moteur thermique.
Le démarreur 1 comprend un moteur électrique 4 pour l'entraînement en rotation du pignon 6 d'un lanceur coulissant sur une extrémité de l'arbre moteur 8 d'axe X-X. Le lanceur est déplacé par l'intermédiaire d'un levier ou fourchette (non représenté) actionné par un contacteur électromagnétique 2 afin d'entrer en prise avec une couronne dentée (non représentée) d'un volant d'inertie du moteur thermique.
Le moteur 4 se compose d'un bobinage inducteur 7 et d'un bobinage d'induit 11 porté par l'arbre moteur 8 ou arbre d'induit sur lequel est aussi monté un collecteur 5 situé du côté opposé au pignon 6. Une extrémité de l'arbre 8 tourne dans un palier 13 auquel est fixé un dispositif porte-balais.

Un câble d'alimentation 3A relie la sortie du contacteur 2 à l'entrée du bobinage inducteur 7 via un passe-fil 70.
Un câble d'alimentation 3B relie la sortie du bobinage inducteur 7 à des premiers balais Bp de polarité positive qui frottent sur des lames conductrices 9 du collecteur 5. Les lames alimentent alors le bobinage rotorique induit 11.

En variante, comme représenté sur la figure 2, le câble d'alimentation 3A alimente directement les premiers balais Bp, l'entrée du bobinage inducteur 7 étant reliée aux seconds balais de polarité négative Bn, et la sortie du bobinage inducteur pouvant être reliée à la masse ou à un point neutre.
Dans une autre variante, le bobinage inducteur est remplacé par un aimant permanent. Ainsi, les premiers balais Bp sont reliés au contacteur par l'intermédiaire du câble d'alimentation 3A via le passe-fil 70, les seconds balais Bn peuvent être quant à eux reliés à la masse ou à un point neutre sans passer par l'inducteur.

On a représenté aux figures 2 à 5, un dispositif 10 porte-balais, dans lequel un câble 3A relie le contacteur à un élément électriquement conducteur 14 via le passe-fil 70.
Le dispositif 10 porte-balais est constitué :
- d'un support 12 destiné à être fixé, orienté et indexé sur le palier arrière 13 du démarreur par des moyens non représentés,
- d'un élément électriquement conducteur 14,
- d'un moyen de fixation constitué d'au moins une plaque 16A, 16B destiné à relier l'élément conducteur 14 au support 12,
- et de quatre cages Cp, Cn fixées sur la face supérieure 54A, 54B du moyen de fixation. Ces cages reçoivent chacune un balai Bp, Bn associé.

Le support 12 est représenté ici sous la forme d'un anneau et constitue une rondelle.
Ainsi, le bord extérieur 18 du support annulaire 12 est circulaire pour s'adapter à la forme du palier arrière, tandis que son bord intérieur 24 présente une découpe complexe avec notamment deux paires d'encoches opposées 26p, 26n s'étendant radialement vers le bord extérieur 18, chaque encoche 26p, 26n étant située angulairement au droit d'une cage associée Cp, Cn.

En variante, le support 12 peut avoir tout autre forme comme par exemple il peut être carré ou rectangulaire, mais de préférence une forme qui s'inscrit dans la forme du palier ou de la pièce sur laquelle il est monté.

Le support annulaire 12 comporte également une patte de fixation 34 qui s'étend axialement vers le haut et qui est réalisée venue de matière par découpe et pliage, pour la fixation du passe-fil 70 recevant le câble d'alimentation 3A. Ce câble vient alimenter l'élément électriquement conducteur 14.
Le câble d'alimentation 3A peut se présenter sous la forme d'un ensemble de fils tressés recouvert ou non d'une gaine de protection.

L'élément électriquement conducteur 14 constitue le pont inter-balais entre les balais Bp de polarité positive.

Comme visible sur les figures 2 à 5, l'élément conducteur 14 est situé dans l'ouverture 72 du support annulaire 12.
Ainsi, on réduit l'encombrement radial du support, l'élément électriquement 14 conducteur se trouvant entre l'arbre d'induit de la machine électrique tournante et le support 12.
Par ouverture, on entend l'espace délimité par le bord intérieur 24 du support 12.
Par situé dans l'ouverture 72, on comprendra que l'élément conducteur 14 est inscrit totalement dans cette ouverture.
Cependant l'élément conducteur 14 peut être décalé axialement vers le haut ou vers le bas par rapport au plan délimité par le support 12 mais tout en restant dans le prolongement de l'ouverture 72 de ce support 12.

L'élément conducteur 14 présente, en outre, une épaisseur sensiblement égale à celle du support 12.

Par épaisseur sensiblement égale, on comprendra que l'élément conducteur 14 et le support 12 peuvent avoir une différence d'épaisseur de quelques millimètres. Cela peut être notamment le cas lorsque l'on a besoin de passer un courant plus important, le diamètre étant limité on doit alors augmenter l'épaisseur de l'élément conducteur.
De plus en position assemblée, ces deux composants 12, 14 sont sensiblement coplanaires du coté de leurs faces inférieures respectives 20, 40. Par sensiblement coplanaire, on comprendra que l'élément conducteur 14 et le support 12 peuvent avoir un décalage angulaire de quelques degrés.
L'élément conducteur électrique 14 se situe ainsi dans l'encombrement axial du support.

On notera que le bord intérieur 38 de l'élément conducteur 14 est de profil globalement circulaire, notamment pour permettre le passage de l'arbre d'induit. En outre, le bord extérieur 36 de l'élément conducteur présente ici également une forme globalement circulaire complémentaire sensiblement au bord 24 du support 12.

L'élément électriquement conducteur 14 est ici réalisé dans un matériau identique au support 12, par exemple en acier.
Ainsi, on peut fabriquer l'élément conducteur 14 et le support 12 à partir d'une même pièce originelle et lors d'une même étape d'un procédé de fabrication par exemple une étape d'emboutissage.
Ceci permet également d'obtenir aisément un élément électriquement conducteur 14 et un support 12 de même épaisseur et coplanaires.

En variante, l'élément électriquement conducteur 14 est réalisé ici par découpe, pliage et emboutissage sous la forme d'un anneau métallique plat en matériau conducteur, par exemple en cuivre.

L'utilisation du cuivre à la place de l'acier permet à épaisseur équivalente, de diminuer la résistance de l'élément électriquement conducteur au passage du courant ce qui améliore le rendement de la machine électrique tournante.
L'aluminium est un bon compromis car il est moins cher et plus léger que le cuivre et meilleur conducteur que l'acier.

Le moyen de fixation 16 de l'élément électriquement conducteur 14 avec le support 12 se présente sous la forme d'au moins une plaque électriquement isolante 16A, 16B, par exemple en plastique.
En variante, la plaque 16A, 16B peut être une résine en polyester ou une résine époxyde contenant de la fibre de verre pour garantir la tenue mécanique de la plaque, comme par exemple la résistance à la compression.

Le moyen de fixation 16 comporte une ouverture destinée au passage de l'arbre d'induit.
On entend par moyen de fixation comportant une ouverture, au moins une plaque délimitée radialement par un bord intérieur et par un bord extérieur, la ou les plaques constituant un élément fermé au moins partiellement délimitant un espace interne constituant l'ouverture.
Le bord extérieur peut être par exemple carré, rectangulaire ou circulaire, de préférence de forme similaire au support 12.
Le bord intérieur peut être par exemple carré, rectangulaire ou circulaire également. Ce bord intérieur doit cependant délimiter une ouverture permettant le passage de l'arbre d'induit.
L'utilisation d'une plaque en résine époxyde contenant de la fibre de verre permet d'améliorer la rigidité de l'ensemble constitué de l'élément conducteur 14, du support 12 et du moyen de fixation 16, chaque pièce renforçant la tenue mécanique de sa voisine.

Ceci permet également d'améliorer la tenue en vibration et la résistance à l'échauffement de l'ensemble.

Dans une variante, le moyen de fixation 16 peut se présenter sous la forme d'une couronne dont le bord intérieur et le bord extérieur sont circulaires.
Le bord intérieur de la couronne est déterminé de manière à définir une ouverture permettant le passage de l'arbre d'induit.
On choisira la distance radiale séparant le bord intérieur du bord extérieur de manière à optimiser l'utilisation de matière tout en maintenant une bonne rigidité de l'ensemble.

Dans une autre variante, comme visible sur les Fig. 2 à 5, le moyen de fixation se présente sous la forme de deux demi-plaques 16A, 16B isolantes chacune se présentant sous la forme d'un secteur angulaire s'étendant sur environ un demi-cercle.
Chaque demi-plaque 16A, 16B est délimitée radialement par un bord circulaire intérieur et par un bord circulaire extérieur définissant une distance radiale entre ces deux bords ou largeur de la plaque 16A, 16B, permettant une bonne rigidité de l'ensemble 12, 14, 16A, 16B.
Ainsi, l'utilisation de deux demi plaques 16A, 16B, chacune constituant une demi-couronne, permet de rendre plus économique la fabrication du moyen de fixation 16.
En effet, les demi-plaques ont une forme leur permettant de d'être découpée l'une en parallèle de l'autre sur une pièce initiale, ce qui permet de limiter les chutes de matière lors de l'étape de découpage de cette pièce pour constituer ces deux demies plaques, à la différence d'une seule plaque en couronne où la partie centrale part au rebus.

En améliorant la rigidité de l'ensemble, 12, 14, 16A, 16B, on garantit au cours du fonctionnement de la machine électrique tournante un espace minimal entre l'élément conducteur et le support. En effet, le positionnement relatif centré de l'élément conducteur 14 par rapport au support annulaire 12 est tel qu'il n'y a aucune partie de ces deux composants en contact mutuel. Le jeu d'orientation globalement radiale prévu entre les bords et parties en vis-à-vis de ces deux composants est alors suffisant pour éviter tout phénomène de court-circuit.
L'espace minimal est par exemple de l'ordre de 2,5 mm.

En outre, l'élément conducteur 14 et le support 12 sont concentriques, et le bord intérieur 24 du support 12 est complémentaire au bord extérieur de l'élément électriquement conducteur 14, ce qui permet de maintenir un espace sensiblement constant entre ces deux éléments 12, 14.

Dans une autre variante, le moyen de fixation 16 peut consister en des bras surmoulés à partir de la plaque support 12 et reliant mécaniquement l'élément électriquement conducteur 14 au support 12. Les bras sont alors isolants électriquement.

La fixation de l'élément électriquement conducteur 14 sur le support 12 par l'intermédiaire du moyen de fixation 16 est assurée ici par des rivets 30A, 30B, 48A, 48B.
La fixation est ainsi simple et économique.

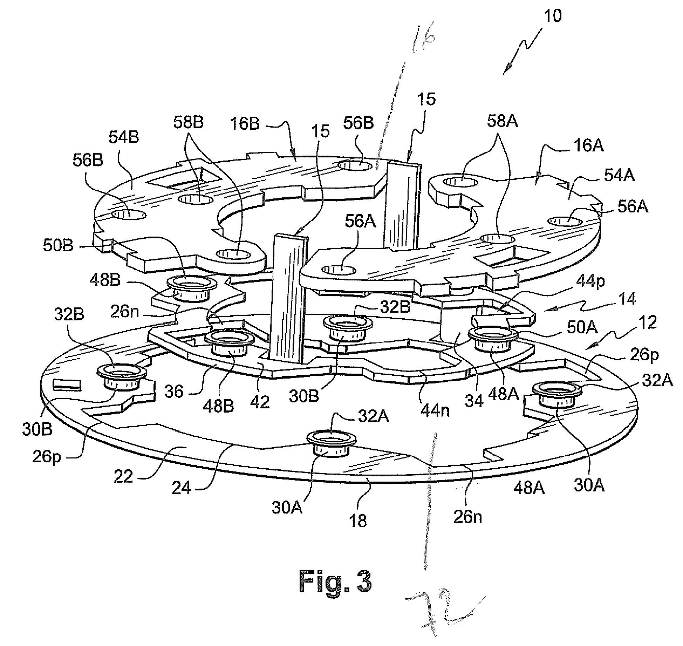

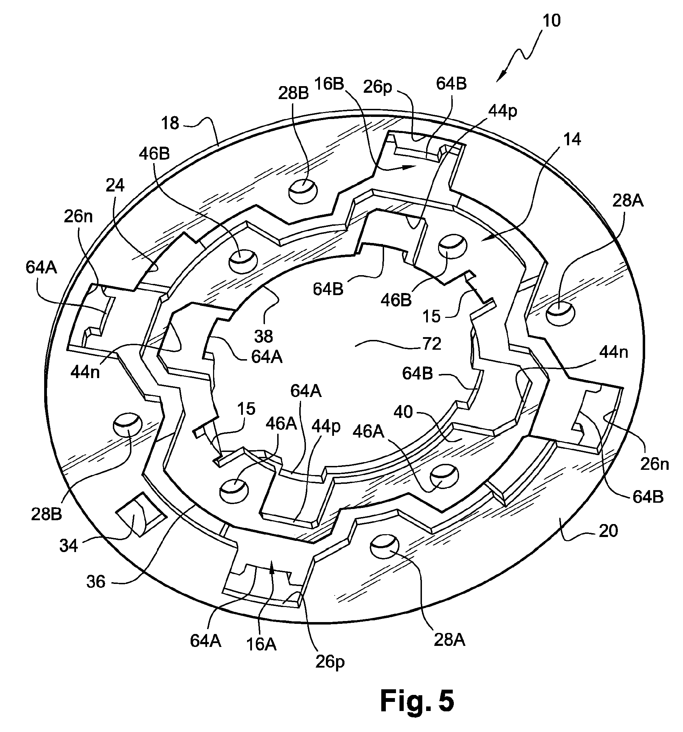

Comme visible sur la Fig. 3, le support annulaire 12 comporte pour cela quatre corps de rivets creux 30A, 30B répartis angulairement à 90° dont chacun s'étend axialement verticalement vers le haut, au-dessus de la face supérieure 22 du support annulaire 12.
Les rivets sont formés venue de matière par emboutissage à partir du support 12 et forment quatre trous débouchant 28A, 28B répartis angulairement (cf figure 5).

De la même manière que le support 12, l'élément électriquement conducteur 14 comporte quatre trous débouchants 46A, 46B résultant de la formation venue de matière par emboutissage, de quatre corps de rivets creux 48A, 48B qui s'étendent verticalement vers le haut au-delà de la face supérieure 42 de l'élément 14.

Afin de faciliter la formation des rivets lors de l'opération d'emboutissage et pour maintenir la résistance mécanique de l'élément conducteur 14 et du support 12, ces derniers possèdent un surplus de matière autour des rivets 30A, 30B, 48A, 48B.

Pour assurer l'assemblage de l'ensemble constitué par l'élément conducteur 14, le support 12 et les plaques 16A, 16B, ce moyen possède deux paires de trous axiaux 56A, 58A - 56B, 58B débouchant dont chacun est traversé par le corps d'un rivet associé.

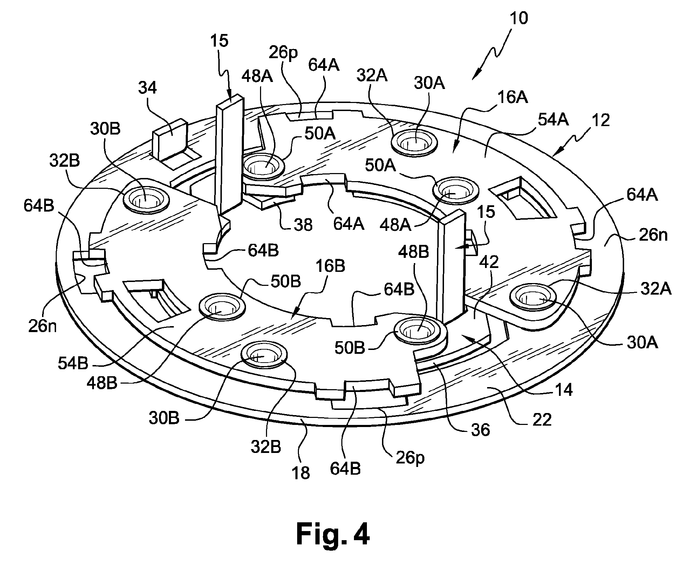

Après cet assemblage et en vue de la fixation de l'ensemble 12, 14, 16A, 16B, la tête 32A, 32B - 50A, 50B de chaque rivet 30A, 30B - 48A, 48B est sertie ou repoussée pour s'étendre au-dessus de la face supérieure 54A, 54B de la demi-plaque isolante de fixation associée 16A, 16B comme illustré notamment aux figures 2 et 4.
La demi-plaque isolante 16A, 16B doit alors pouvoir résister à la compression lors de la déformation de la tête des rivets.

L'utilisation de rivets issus du support 12 et de l'élément électriquement conducteur 14 permet de limiter ainsi le nombre de pièces pour réaliser la fixation de l'élément conducteur et du support.

En variante, la fixation peut être réalisée par soudage.

Les cages Cp, Cn sont ici réparties angulairement de manière régulière à 90° autour de l'axe.
En variante, elles peuvent être réparties angulairement par paire, les cages de chaque paire étant distante l'une de l'autre d'un angle de 60°.

Comme visible sur les figures 4 et 5, chaque demi-plaque 16A, 16B comporte des encoches 64A, 64B formées dans leurs bords circulaires qui permettent de recevoir les cages Cp, Cn.
Cette fixation sur les demi-plaques 16A, 16B permet d'éviter tout risque de court-circuit entre les cages et le reste du dispositif, le moyen de fixation 16A, 16B étant un isolant électrique.
Les cages Cp, Cn sont ainsi maintenues par l'intermédiaire d'une languette (non représentée) destinée à être rabattue sur la surface inférieure des demi plaques 16A, 16B.
En variante, les cages Cp, Cn sont fixées par rivets sur les demi plaques 16A, 16B.
Les cages Cp, Cn sont ainsi solidaires du support 12 par l'intermédiaire des demies plaques 16A, 16B sur lequel elles sont fixées.
Les cages Cp, Cn sont ainsi bien isolées électriquement du reste du dispositif porte-balais.

Afin d'améliorer cette isolation, le support 12 comporte quatre encoches 26p, 26n s'étendant radialement en éloignement de l'axe V. On évite ainsi que la languette de la cage ne vienne toucher le support 12.
L'élément électriquement conducteur 14 comporte en outre quatre encoches 44p, 44n s'étendant radialement en éloignement de l'axe V et qui sont alignées angulairement avec les encoches radiales 26p, 26n du support 12.

On notera que chaque cage comporte un ressort 71, tel que visible à la Fig. 2, pour adapter le contact des balais Bp, Bn contre le collecteur.
Le collecteur est ici de type axial, c'est-à-dire que les balais se déplacent radialement pour venir en contact.
En variante le collecteur peut être de type plat ou frontal.
Dans ce cas, les balais se déplacent axialement, sous l'action d'un ressort, pour venir en contact contre le collecteur.

Le dispositif, selon les Fig. 2 à 5, comporte au moins quatre balais Bp, Bn qui en venant au contact du collecteur vont permettre d'assurer une liaison électrique entre cet organe tournant et la source de tension ou batterie.
Pour cela les balais sont associés par paire de polarité opposée Bp, Bn. Les balais de même polarité peuvent être placés sur le support de manière opposée comme illustré sur la Fig. 2.
En variante les balais de même polarité peuvent être adjacents.
L'invention permet de positionner les balais Bp et les cages Cp à n'importe quel endroit de l'élément électriquement conducteur 14.

Les différents balais Bp, Bn sont alimentés électriquement via des connecteurs 60p, 60n respectifs. Ces connecteurs sont par exemple des connecteurs souples comportant un ensemble de fils de cuivre tressés.
La tresse ainsi formée peut être recouverte ou non d'une gaine de protection.

Le connecteur 60p comporte ainsi une première extrémité au contact d'un balai Bp et une deuxième extrémité au contact de l'élément électriquement conducteur 14 et ceci afin d'assurer la liaison électrique entre ces deux pièces.

De part la forme de l'élément électriquement conducteur 14 en couronne ou demi-couronne, celui-ci propose une multitude de zones de réception pour la seconde extrémité du connecteur 60p.
On peut ainsi optimiser la longueur du connecteur 60p, en ajustant au mieux la fixation de la seconde extrémité de celui-ci sur l'élément électriquement conducteur. Ceci permet également de limiter les contraintes d'encombrement sur le dispositif porte-balais.

En variante, le nombre de zones de réception est limité à des pattes de raccordement 15 s'étendant axialement entre les deux bords d'extrémité angulaire opposés des deux demi-plaques 16A, 16B comme visible sur la Fig. 2.
Chacune des pattes de raccordement 15 électrique est venue de matière avec l'élément électriquement conducteur 14 par découpe et pliage et est orientée verticalement vers le haut parallèlement à l'axe V de manière à s'étendre au-dessus du plan commun aux faces supérieures 22 du support 12 et 42 de l'élément conducteur 14.
La fixation du connecteur 60p, alimentant les balais Bp de polarité positive, sur la patte 15 adjacente est ainsi facilitée notamment si la fixation a lieu lors d'une opération de soudage.

Chaque balai Bp est ainsi relié à la source de tension via l'élément électriquement conducteur 14. Ce dernier est alimenté par le câble d'alimentation 3A comme présenté sur la Fig. 2, via par exemple la patte de raccordement 15.
Le support 12 dispose d'une patte de fixation 34 qui s'étend axialement vers le haut et qui est réalisée venue de matière par découpe et pliage, pour la fixation du passe-fil 70 recevant le câble d'alimentation 3A.

Chaque balai Bn appartenant à l'autre paire de balais de polarité opposée (ici négative) est relié électriquement via le connecteur 60n à la masse, par exemple au boîtier du moteur électrique. Cette liaison peut être directe ou indirecte, notamment elle peut passer par le bobinage inducteur 7.
Des éléments 62A, 62B situés sur le moyen de fixation permettent de guider les connecteurs 60n.

Que ce soit pour les balais Bp ou Bn, ceux-ci disposent d'une zone de réception spécifique sur laquelle on vient souder la première extrémité du connecteur respectivement 60p, 60n.
Afin d'utiliser des balais standard, cette zone de réception peut être par exemple placée de manière déterminée et identique pour chacun des balais constituant le dispositif. Cette solution est ainsi simple et économique.
En variante, la première extrémité du connecteur peut être vissée sur le balai, ce qui facilite les opérations de maintenance.

On notera que le courant présent dans l'élément conducteur peut atteindre 1000 A, et que la tension présente est la tension de la batterie.

Ainsi, pour éviter tout court-circuit entre l'élément électriquement conducteur 14 et le palier arrière 13 sur lequel vient se fixer le dispositif porte-balais, ce palier possède une forme adaptée, par exemple en creux permettant un dégagement intérieur afin d'éviter tout contact avec l'élément conducteur.
En variante, les courts-circuits entre l'élément conducteur 14 et le palier 13 peuvent être limités par l'utilisation d'une matière isolante, par exemple en plastique, fixée sur ce palier.

La présente description n'est pas limitée aux exemples de réalisation ci-dessus.

## Revendications

1. Dispositif porte-balais (10) pour machine électrique tournante, comportant
- un support (12) apte à être relié mécaniquement à la machine électrique tournante et comprenant une ouverture (72) destinée au passage d'un arbre d'induit de la machine électrique tournante,
- un collecteur;
- un élément électriquement conducteur (14) destiné à être relié à une source de tension;
- un moyen de fixation électriquement isolant (16) reliant mécaniquement l'élément électriquement conducteur (14) au support (12);
- au moins une cage (Cp) solidaire du support (12) destinée à recevoir un balai (Bp) ;
- au moins un balai (Bp) relié électriquement à l'élément électriquement conducteur (14) ;
***caractérisé en ce que*** l'élément électriquement conducteur (14) est situé dans l'ouverture (72) du support (12).

2. Dispositif selon la revendication précédente **caractérisé en ce qu'**il y a au moins deux cages (Cp) et deux balais (Bp) reliés électriquement au conducteur (14).

3. Dispositif selon l'une quelconque des revendications précédentes ***caractérisé en ce que*** l'élément conducteur (14) et le support (12) sont sensiblement coplanaires.

4. Dispositif selon l'une quelconque des revendications précédentes ***caractérisé en ce que*** l'élément conducteur (14) et le support (12) sont sensiblement de même épaisseur.

5. Dispositif selon l'une quelconque des revendications précédentes ***caractérisé en ce que*** l'élément conducteur (14) et le support (12) sont sensiblement concentriques.

6. Dispositif selon l'une quelconque des revendications précédentes ***caractérisé en ce que*** l'élément conducteur (14) et le support (12) sont réalisés dans un même matériau.

7. Dispositif selon l'une quelconque des revendications précédentes ***caractérisé en ce que*** l'élément conducteur (14) comporte deux pattes de raccordement (15) à chacune desquelles un balai (Bp) est apte à être raccordé électriquement par un connecteur (60p).

8. Dispositif selon l'une quelconque des revendications précédentes ***caractérisé en ce que*** le moyen de fixation se présente sous la forme d'au moins une plaque (16A, 16B) comprenant une ouverture destinée au passage de l'arbre d'induit.

9. Dispositif selon la revendication 7, **caractérisé en ce que** le moyen de fixation (16A, 16B) se présente sous la forme d'une couronne.

10. Dispositif selon la revendication 7, **caractérisé en ce que** le moyen de fixation se présente sous la forme de deux demi-plaques (16A, 16B) dont chacune constitue une demi-couronne.

11. Dispositif selon l'une quelconque des revendications précédentes **caractérisé en ce que** le support (12) et l'élément conducteur (14) sont reliés au moyen de fixation (16A, 16B) par des rivets (30A, 30B - 48A, 48B).

12. Dispositif selon la revendication précédente, **caractérisé en ce que** le corps de chaque rivet (30A, 30B - 48A, 48B) est réalisé venu de matière avec le support (12) ou l'élément conducteur (14) à partir duquel il s'étend axialement vers le haut à travers un trou associé (56A, 58A - 56B, 58B) du moyen de fixation (16A, 16B).

13. Dispositif selon l'une quelconque des revendications précédentes, **caractérisé en ce que** chaque cage (Cp, Cn) est fixée sur la face supérieure (54A, 54B) du moyen de fixation (16A, 16B).

14. Démarreur équipé du dispositif selon l'une quelconque des revendications précédentes.
